# EUROPÄISCHE PATENTSCHRIFT

(11) **EP 0 610 708 B1**
(45) Veröffentlichungstag und Bekanntmachung des Hinweises auf die Patenterteilung: **29.09.1999**
(21) Anmeldenummer: 94100983.9
(22) Anmeldetag: 24.01.1994
(51) Int. Cl.: F04B 15/04, F04B 53/14, F04B 53/16, F04B 53/10, C04B 35/58

(54) **Dosierpumpe**
Dosing pump
Pompe doseuse

(30) Priorität: 09.02.1993 DE 4303759
(43) Veröffentlichungstag der Anmeldung: 17.08.1994
(73) Patentinhaber: MAUCHER, Eberhard, 34134 Kassel (DE)
(72) Erfinder: MAUCHER, Eberhard, 34134 Kassel (DE)

(56) Entgegenhaltungen:
- DE-A- 4 108 105
- DE-B- 1 278 248
- GB-A- 1 365 292
- US-A- 4 120 613
- US-A- 4 556 098
- PATENT ABSTRACTS OF JAPAN Bd. 17, Nr. 294 (M-1424) 07 Juni 1993 & JP-A-05 018 354 (KUBOTA) 26 Januar 1993
- PATENT ABSTRACTS OF JAPAN vol. 14, no. 404 (M-1018)31. August 1999 & JP-A-02 154 875 (ELECTRIC POWER) 14. Juni 1990

## Beschreibung

Die Erfindung betrifft eine Dosierpumpe für Flüssigkeiten, insbesondere flüssige Metalle, insbesondere Blei oder Aluminium, nach dem Oberbegriff des Anspruchs 1.

Die Förderung flüssiger Metalle durch Pumpen ist problematisch, weil flüssige Metalle wie beispielsweise Blei oder Aluminium oder sonstige Nichteisen-Metalle sehr aggressiv sind. Wenn derartige flüssige Metalle mit Bauteilen der Pumpe in Berührung kommen, entstehen chemische Reaktionen, die eine korrosive und erosive Wirkung auf die Pumpenteile ausüben. Dies kann dazu führen, daß die Dosiergenauigkeit der Pumpe bereits nach kurzer Betriebszeit erheblich nachläßt. Ferner kann die Pumpe bereits nach einer kurzen Betriebszeit funktionsunfähig werden.

Bei der Dosierung von Blei durch eine Kolbenpumpe taucht die Pumpe im allgemeinen in das flüssige Blei ein. Im allgemeinen, beispielsweise bei der Herstellung von elektrischen Batterien, wird sogenanntes technisches Blei verwendet, also kein chemisch reines Blei, sondern Blei, das - von Charge zu Charge verschieden - mehr oder weniger mit verschiedenen Stoffen verunreinigt ist. Ferner ist das Blei, das vorwiegend für die Herstellung von Batterien verwendet wird, mit anderen Bestandteilen legiert, beispielsweise mit Antimon oder - nach einer neueren Technologie, die zur Zeit entwickelt wird - mit Kalzium. Das mit Antimon legierte Blei ist weniger aggressiv und kann mit gewissen Einschränkungen noch mit einer Dosierpumpe aus Stahl verarbeitet werden. Bei mit Kalzium legierten Blei ist dies aber kaum noch oder gar nicht mehr möglich, weil Kalzium oxidiert und sich noch mit anderen Metallen verbindet.

Zur Lösung der geschilderten Probleme ist in der DE-AS 12 78 248 vorgeschlagen worden, bei einer Kolbenpumpe zum Fördern schmelzflüssiger Nichteisenmetalle wie zum Beispiel Aluminium, Zink, Kupfer das Pumpengehäuse, den Kolben, die Ventilkugeln und die Begrenzungsbolzen aus siliziumnitridgebundenem Siliziumkarbid, also aus einem keramischen Material, herzustellen. Dabei soll die gesamte Pumpe, die vollkommen in das Schmelzbad eingetaucht wird, aus dem erwähnten keramischen Material hergestellt werden.

Die in der DE-AS 12 78 248 beschriebene Pumpe ist in der Praxis nicht realisiert worden.

Aus der DE-OS 33 05 647 ist es bekannt, den Verdrängerteil einer Kolbenpumpe, insbesondere einer Hochdruckpumpe für abrasive und/ oder korrosive Flüssigkeiten, aus gesintertem, keramischem, insbesondere oxidkeramischem Material herzustellen. Unter keramischen Materialien werden dabei Sinterkörper aus gesinterten Nitriden, beispielsweise Siliziumnitrid, Boriden, Titanaten und oxidkeramischen Materialien verstanden, wie sie als Aluminiumoxidkeramik und Zirkonoxidkeramik bekannt sind. Bei der Pumpe nach der DE-OS 33 05 647 kommt nur noch der Keramikkolben als solcher mit dem zu pumpenden Medium in Berührung, wobei der Kolben durch Manschetten im Zylinderraum abgedichtet wird.

In der älteren, nicht vorveröffentlichten deutschen Patentanmeldung P 42 05 469.9 vom 22.02.1992 ist eine Kolbenpumpe zum Dosieren flüssiger Metalle beschrieben, die in allen ihren Bestandteilen aus einem keramischen Material, vorzugsweise Bornitrid, besteht.

Aus der US-A-4 556 098 ist eine Injektionspumpe bekannt, die ein Gehäuse, einen Zylinder und einen Kolben aufweist. Das Gehäuse ist aus einem Material mit gutem Korrosionswiderstand und ausreichender mechanischer Festigkeit gebaut.

Aufgabe der Erfindung ist es, eine Dosierpumpe für Flüssigkeiten, insbesondere Flüssigmetalle, insbesondere Blei oder Aluminium, nach dem Oberbegriff des Anspruchs 1 vorzuschlagen, die eine hohe Verschleißfestigkeit aufweist.

Erfindungsgemäß wird diese Aufgabe durch die kennzeichnenden Merkmale des Anspruchs 1 gelöst. Das Gehäuse besteht aus einem unteren Gehäuseteil und einem oberen Gehäuseteil, die durch Zuganker und Hülsen miteinander verspannt sind, wobei der Zylinder zwischen den Gehäuseteilen gehalten ist. Hierdurch wird die Verschleißfestigkeit erhöht.

Vorteilhafte Weiterbildungen sind in den Unteransprüchen beschrieben.

Vorzugsweise bestehen der Zylinder und der Kolben aus Siliziumnitrid.

Nach einer vorteilhaften Weiterbildung bestehen der oder die Ventilkörper und die Ventilsitze aus Keramik, insbesondere Siliziumnitrid.

Vorzugsweise handelt es sich bei dem Siliziumnitrid um ein sogenanntes "gehiptes" Siliziumnitrid, welches gesintert und nachgesintert worden ist. Die erste Sinterung ist dabei vorzugsweise eine "normale" Sinterung nach einem herkömmlichen Sinterverfahren, die zweite Sinterung besteht vorzugsweise in einer heißisostatischen Pressung.

Die Erfindung beruht auf der Erkenntnis, daß die Herstellung einer gesamten Dosier-Kolbenpumpe aus keramischem Material, wie in der DE-AS 12 78 248 beschrieben, in der Praxis - wenn überhaupt - nur mit sehr großen Schwierigkeiten möglich ist und daß es auch gar nicht erforderlich ist, die gesamte Dosierpumpe, also alle ihre Bestandteile, aus einem keramischen Material herzustellen. Dementsprechend bestehen bei der erfindungsgemäßen Dosierpumpe der Zylinder und der Kolben aus Keramik. Die übrigen Bestandteile der Dosierpumpe, insbesondere das Gehäuse, können aus anderen Materialien, insbesondere Stahl, vorzugsweise Edelstahl, bestehen.

Ferner ist es vorteilhaft, wenn auch der oder die Ventilkörper und/oder die Ventilsitze aus Keramik, insbesondere Siliziumnitrid bestehen. Vorzugsweise wird für den oder die Ventilkörper und/oder die Ventilsitze dasselbe Keramikmaterial verwendet wie für den Zylinder und den Kolben.

Die Erfindung geht von der Erkenntnis aus, daß die durch das zu fördernde Medium verursachte Oberflächenbeeinträchtigtung der Bauteile der Pumpe insbesondere bei den bewegten Pumpenteilen, also bei denjenigen Pumpenteilen, die zueinander eine Relativbewegung ausführen, besonders schädlich ist. Deshalb werden diese Pumpenteile (Zylinder und Kolben sowie gegebenenfalls Ventilkörper und/oder Ventilsitze) aus Keramik gefertigt. Bei den übrigen Pumpenteilen, die keine Bewegungen bzw. Relativbewegungen zueinander ausführen, kann die durch das zu fördernde Medium, in das die Pumpe eingetaucht ist, hervorgerufene Oberflächenbeeinträchtigung noch hinnehmbar sein, weshalb diese nicht-bewegten Pumpenteile aus anderen Materialien hergestellt sein können.

Die für die bewegten Pumpenteile verwendete Keramik sollte eine verhältnismäßig hohe Temperatur und vorzugsweise einen verhältnismäßig großen Temperaturschock aushalten können. Wenn die Dosierpumpe zum Fördern und Dosieren von flüssigem Blei verwendet wird, wird die Pumpe beim Eintauchen in das flüssige Blei von einer Umgebungstemperatur in Höhe von etwa 20° C sehr schnell auf die Temperatur des flüssigen Bleis in Höhe von etwa 500° C erwärmt. Beim Dosieren von flüssigem Aluminium beträgt die Temperatur des zu fördernden und zu dosierenden flüssigen Aluminiums etwa 750° C. Flüssiges Aluminium muß insbesondere bei Druckgußmaschinen bzw. bei der Vordosierung für Aluminium-Druckgußmaschinen gefördert und dosiert werden. Die verwendete Keramik sollte ferner möglichst chemisch resistent gegenüber Metallschmelzen und deren Oxiden sein.

Die Keramik sollte ferner sehr gute Trockenlaufeigenschaften haben. Wenn Keramikflächen innerhalb der normalen Luftatmosphäre gegeneinander bewegt werden, entsteht üblicherweise nicht ein vollständiger Trockenlauf, da in der Luftatmosphäre immer etwas Feuchtigkeit vorhanden ist, die eine gewisse Restschmierung bewirkt. Festes Blei (also nicht flüssiges Blei) besitzt verhältnismäßig gute Gleiteigenschaften und wird teilweise auch als Schmiermittel verwendet. Bei flüssigem Blei, in das die Dosierpumpe eintauchen kann, ist dies jedoch völlig anders. Flüssiges Blei hat überhaupt keine Schmiereigenschaften, so daß bei einer in flüssiges Blei eingetauchten Dosierpumpe ein 100 %iger Trockenlauf stattfindet. Dementsprechend muß die Keramik hierfür geeignete Gleiteigenschaften haben. Die verwendete Keramik sollte ferner möglichst verschleißfest sein.

Überraschend hat sich gezeigt, daß das oben bereits beschriebene Siliziumnitrid für die Ausführung der Erfindung besonders geeignet ist. Es ist insbesondere besser geeignet als das in der DE-AS 12 78 248 beschriebene siliziumnitridgebundene Siliziumkarbid.

Vorzugsweise weist der Kolben einen U-förmigen Querschnitt auf. Der Befestigungspunkt der Kolbenstange an dem Kolben kann dann in das Innere des Kolbens verlegt werden, was insbesondere unter Festigkeitsgesichtspunkten günstig ist.

Nach einer weiteren vorteilhaften Weiterbildung ist die Wandstärke des Zylinders im wesentlichen genauso groß wie die Wandstärke des Kolbens. Dies ist im Hinblick auf die Wärmeausdehnung von Zylinder und Kolben günstig.

Vorzugsweise ist die Wandstärke des Kolbenbodens im wesentlichen genauso groß wie die Wandstärke des Kolbenumfangs. Auch diese Lösung ist im Hinblick auf die Wärmeausdehnung von besonderem Vorteil, insbesondere dann, wenn auch die Wandstärke des Zylinders im wesentlichen genauso groß ist wie die Wandstärke des Kolbenbodens und des Kolbenumfangs. Nach einer besonders bevorzugten Ausführungsform weist der Kolben einen U-förmigen Querschnitt auf und sind die Wandstärken des Zylinders, des Kolbenumfangs und des Kolbenbodens im wesentlichen gleich groß.

Nach einer weiteren vorteilhaften Weiterbildung ist die Kolbenstange im Bereich des Kolbenbodens mit dem Kolben verbunden. Hierdurch werden die von der Kolbenstange auf den Kolben ausgeübten Kräfte besonders vorteilhaft in den Kolben eingeleitet, was sich insbesondere bei dem mit wesentlich höheren Kräften verbundenen Druckhub günstig auswirkt. Der Kraftangriffspunkt der Kolbenstange sollte in dem Kolben möglichst nahe am Kolbenboden liegen.

Der Kolben und der Zylinder der Dosierpumpe sollten extrem genau gefertigt werden, um eine Leckage durch die Passung des Kolbens in dem Zylinder hindurch zu vermeiden. Dies würde nämlich zu einer Verminderung der Dosiergenauigkeit führen. Ferner könnte der Kolben in dem Zylinder klemmen. Die Passung zwischen Kolben und Zylinder sollte auch deshalb extrem genau sein, weil die für den Kolben und den Zylinder verwendete Keramik im allgemeinen nicht elastisch verformbar ist. Um eine besonders genaue Passung des Kolbens in dem Zylinder während des Betriebes zu erreichen, wird nach einer weiteren vorteilhaften Weiterbildung der Erfindung vorgeschlagen, den Kolben durch eine kardanische Aufhängung mit der Kolbenstange zu verbinden. Dies kann besonders vorteilhaft dadurch verwirklicht werden, daß die Kolbenstange durch ein Kugelgelenk mit dem Kolben verbunden ist. Durch die kardanische Lagerung des Kolbens an der Kolbenstange können Spannungen bzw. Verspannungen vermieden werden, die zu einem Nachlassen der Dosiergenauigkeit und zu einem Verklemmen des Kolbens führen können.

Vorzugsweise sind die Zuganker gegen die Hülsen über Federn, insbesondere Tellerfedern miteinander verspannt. Durch diese Federn können Wärmedehnungen ausgeglichen werden. Selbst wenn derartige Wärmedehnungen während des Betriebes auftreten, wird durch die Federn stets eine ausreichende Spannung des aus einem unteren und einem oberen Gehäuseteil bestehenden Gehäuses aufrechterhalten, werden also die beiden Gehäuseteile auch dann zuverlässig gegeneinander verspannt, wenn durch Temperaturunterschiede Wärmedehnungen hervorgerufen werden, beispielsweise dadurch, daß die Pumpe, die zunächst eine Umgebungstemperatur von etwa 20° C aufweist, in die heiße flüssige Metallschmelze mit einer Temperatur von beispielsweise 500° C (bei flüssigem Blei) oder 750° C (bei flüssigem Aluminium) eingetaucht wird. Wenn sich die Zuganker durch Wärmeeinwirkung ausdehnen, sorgen die Tellerfedern für einen entsprechenden Ausgleich der Wärmedehnungen. Hierbei ist zu berücksichtigen, daß Stahl, aus dem die Gehäuseteile vorzugsweise gefertigt sind, einen wesentlich größeren Wärmeausdehnungskoeffizienten aufweist als Keramik, sich also bei Wärmeeinwirkung wesentlich stärker ausdehnt, und zwar etwa um den Faktor 10.

Eine weitere vorteilhafte Weiterbildung ist dadurch gekennzeichnet, daß die Oberfläche des Ventilkörpers ganz oder teilweise aus einer Kugelfläche besteht und daß die Ventilsitze eine kegelförmige Oberfläche aufweisen. Auch die umgekehrte Ausgestaltung ist möglich: Dann ist die Oberfläche des Ventilkörpers ganz oder teilweise kegelförmig, und die Ventilsitze weisen eine kugelförmige Oberfläche auf. In beiden Fällen ergibt sich eine für die Abdichtung besonders günstige, linienförmige Auflage des Ventilkörpers auf dem zugehörigen Ventilsitz. Ferner können dadurch Toleranzen und/oder Winkelabweichungen, die fertigungsbedingt sind und die auch im Betrieb der Pumpe durch Wärmeausdehnungen und andere Einflüsse wie beispielsweise mechanische Beanspruchungen (Stöße etc.) entstehen können, einfach und zuverlässig ausgeglichen werden.

Nach einer weiteren vorteilhaften Weiterbildung ist das Ventil ein aktiv betätigtes Ventil. Dieses Ventil kann pneumatisch betätigt werden. Die Umsteuerung des Ventils erfolgt in Abhängigkeit von der Stellung des Kolbens, vorzugsweise am oberen und unteren Totpunkt des Kolbens. Hierfür sind an der Kolbenstange entsprechende Sensoren vorgesehen.

Vorzugsweise befindet sich der Druckkanal des Ventils auf derjenigen Seite des Ventilkörpers, die von der den Ventilkörper betätigenden Ventilstange abgewandt ist. Hierdurch wird der Vorteil erreicht, daß die Durchgangsöffnung der Ventilstange durch das Pumpengehäuse nicht abgedichtet werden muß, was unter Umständen nur schwer oder überhaupt nicht möglich wäre, insbesondere bei der Förderung und Dosierung von flüssigem Blei mit einer Temperatur von etwa 500° C. Andernfalls könnte in der von der Pumpe wegführenden Druckleitung ein Rücklauf entstehen, der zu Betriebsstörungen und Dosierungsfehlern führen könnte.

Nach einer anderen vorteilhaften Ausführungsform ist ein selbststeuerndes Druckventil und ein selbststeuerndes Saugventil vorhanden. Bei dieser Lösung ist demnach kein aktives Ventil vorgesehen, sondern zwei passive Ventile, die vorzugsweise aus einer Keramikkugel und einem Keramikventilsitz bestehen, wobei der Ventilsitz vorzugsweise aus einer Kegelfläche besteht.

Ein Ausführungsbeispiel der Erfindung wird nachstehend anhand der beigefügten Zeichnung im einzelnen beschrieben. In der Zeichnung zeigt
- Fig. 1: eine Ausführungsform der Dosierpumpe in einer Seitenansicht, teilweise im Schnitt,
- Fig. 2: die untere Hälfte der Dosierpumpe gemäß Fig. 1, nämlich die Befestigungsplatte und das Pumpengehäuse,
- Fig. 3: die untere Hälfte der Fig. 2, nämlich das Pumpengehäuse in einer Seitenansicht, teilweise im Schnitt und
- Fig. 4: eine zweite Ausführungsform einer Dosierpumpe in einer Seitenansicht, teilweise im Schnitt.

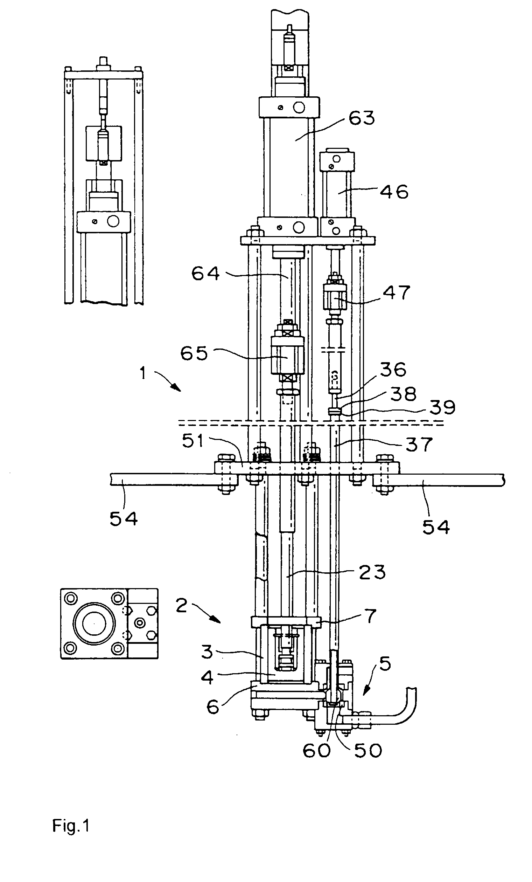

Die in Fig. 1 insgesamt mit 1 bezeichnete Dosierpumpe besteht aus einem Gehäuse 2 mit einem Zylinder 3, in dem ein Kolben 4 längsverschieblich geführt ist, und aus einem Ventil 5. Der Zylinder 3 und der Kolben 4 sind aus Keramik, nämlich Siliziumnitrid, hergestellt. Das Gehäuse 2, bestehend aus dem unteren Gehäuseteil 6 und dem oberen Gehäuseteil 7, ist aus Edelstahl gefertigt.

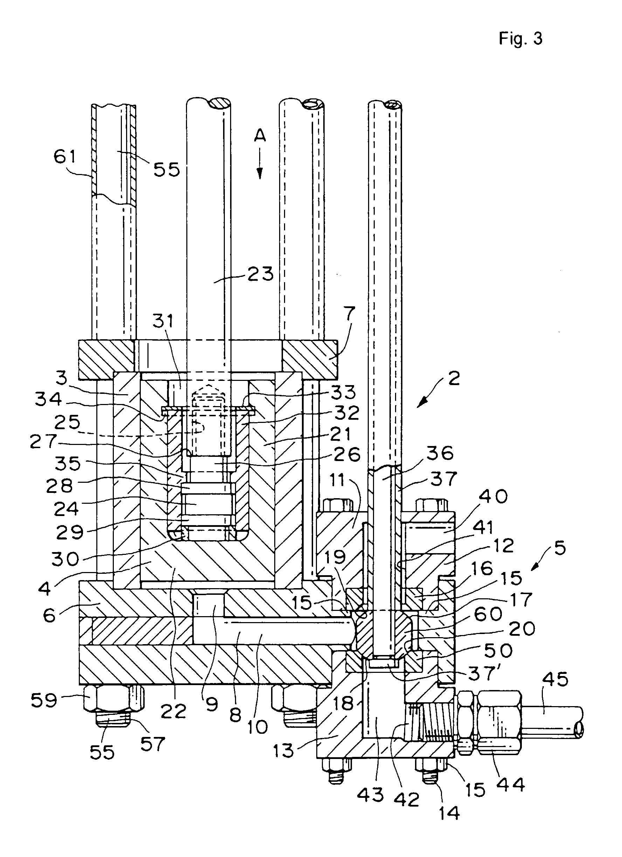

In der Fig. 3 ist die Dosierpumpe in einem vergrößerten Maßstab dargestellt. In den unteren Gehäuseteil 6 ist ein Saug- und Druckkanal 8 eingearbeitet, der aus einem koaxial zum Kolben 4 verlaufenden, in der oberen Endfläche des unteren Gehäuseteils 6 endenden Kanal 9 und einem rechtwinklig daran anschließenden, an der Umfangsfläche des unteren Gehäuseteils 6 mündenden Kanal 10 besteht. Mit dem unteren Gehäuseteil 6 ist seitlich ein Ventilgehäuse 11 verbunden, das aus einem oberen Ventilgehäuseteil 12 und einem unteren Ventilgehäuseteil 13 besteht, die miteinander durch Bolzen 14 und Muttern 15 verspannt sind. Die Ventilgehäuseteile 12, 13 liegen auf Ansätzen 15 in dem unteren Gehäuseteil 6 auf.

Das Ventil 5 besteht aus einem Ventilkörper 60 und einem Saugventilsitz 50 sowie einem Druckventilsitz 16. Der Ventilkörper 60 und die Ventilsitze 50, 16 sind aus Keramik, nämlich Siliziumnitrid, gefertigt. Die obere Endfläche 17 und die untere Enfläche 18 des Ventilkörpers 60 sind als Teil-Kugelflächen ausgebildet. Die zugehärigen Ventilsitz-Flächen 19 und 20 der Ventilsitze 16 und 50 sind als Kegelflächen mit einem Winkel von 45° ausgebildet.

Der Kolben 4 weist einen U-förmigen Querschnitt auf. Er besteht aus einem im wesentlichen zylindrischen Mantelteil 21 und einem Kolbenboden 22. Die Wandstärke des Zylinders 3 ist im wesentlichen genauso groß wie die Wandstärke des Kolbens 4, und zwar sowohl des Mantelteils 21 als auch des Kolbenbodens 22 (in der Zeichnung der Fig. 3 ist der Kolbenboden 22 mit einer größeren Wandstärke gezeichnet; tatsächlich ist die Wandstärke des Kolbenbodens 22 jedoch genauso groß wie die Wandstärke des Kolbenmantels 21 und wie die Wandstärke des Zylinders 3).

Die Kolbenstange 23 ist über ein Kugelgelenk 24 mit dem Kolben 4 verbunden. Am unteren Ende der Kolbenstange 23 ist ein Innengewinde 25 vorgesehen, in das ein Zwischenstück 26 bis zu einem einen Anschlag bildenden Absatz 27 eingeschraubt ist. Am unteren Ende des Zwischenstücks 26 befindet sich ein im Durchmesser größerer Ansatz 28, dessen untere Endfläche als Kugelfläche für das Kugelgelenk ausgebildet ist (in der Zeichnung nicht dargestellt). Die (in der Zeichnung ebenfalls nicht dargestellte) Kugel des Kugelgelenks 24 liegt mit ihrer Unterseite an einer entsprechenden kugelförmigen Gegenfläche auf, die in dem Lagerteil 29 ausgebildet ist. Das Lagerteil 29 liegt auf einem Distanzring 30 auf, der seinerseits auf der oberen Endfläche des Kolbenbodens 22 aufliegt.

In der Aussparung 31 des einen U-förmigen Querschnitt aufweisenden Kolbens 4 ist eine Kolbenhülse 32 angeordnet, deren obere Endfläche sich an einem Befestigungsring (Seeger-Ring) 33 abstützt, der in einer Nut 34 des Kolbenmantels 21 liegt. Ferner weist die Kolbenhülse 32 einen nach innen weisenden Vorsprung 35 auf, an dessen Unterseite der Absatz 28 des Zwischenstücks 26 abgestützt ist. Die Kolbenstange 23 ist auf diese Weise verhältnismäßig nahe an dem Kolbenboden 22 mit dem Kolben 4 verbunden. Bei dem nach oben gehenden Saughub wird die von der Kolbenstange 23 ausgeübte Kraft über den Absatz 28, den Vorsprung 35, die Kolbenhülse 32 und den Befestigungsring 33 auf den Kolben 4 übertragen. Bei dem nach unten gehenden Druckhub, bei dem wesentlich größere Kräfte übertragen werden müssen, wird die Kraft der Kolbenstange 23 über das Kugelgelenk 24, das untere Kugelgelenk-Lagerteil 29 und den Distanzring 30 direkt in den Kolbenboden 22 eingeleitet.

Das Ventil 5 ist als aktiv betätigtes Steuerventil ausgestaltet. Der Ventilkörper 60 wird von einer Ventilstange 36 durchsetzt.

Er liegt mit seiner unteren Endfläche auf einem am unteren Ende der Ventilstange 36 vorgesehenen, im Durchmesser größeren Bund 37' auf. Der Ventilkörper 60 wird an seiner oberen Endfläche durch eine die Ventilstange 36 umgebende Ventilhülse 37 eingespannt, die an ihrem oberen Ende mit der Ventilstange 36 verspannt ist (siehe Fig. 1), und zwar durch eine auf einem Außengewinde der Ventilstange 36 angeordnete Mutter 38, die über eine Scheibe 39 auf das obere Ende der Ventilhülse 37 drückt.

Der Saugkanal des Ventils 5 besteht aus einem Eingangskanal 40 und einem koaxial zur Ventilstange 36 und der Ventilhülse 37 verlaufenden Kanal 41. Am unteren Ende des Kanals 41 sitzt der obere Ventilsitz, also der Druckventilsitz 16, in einem Absatz in dem oberen Ventilgehäuseteil 11.

Der Druckkanal besteht aus einem Ausgangskanal 42 und einem Kanal 43, der koaxial zur Ventilstange 36 und zu dem Saugkanal 41 verläuft. In den Ausgangs-Druckkanal 42 ist ein Anschlußstück 44 eingeschraubt, an das sich die Druckleitung 45 anschließt.

Das Ventil 5 wird in Abhängigkeit von der Bewegung des Kolbens 4 gesteuert, und zwar durch einen Pneumatikantrieb 46 (Fig. 1). Die Ventilstange 36 ist mit der Kolbenstange des Pneumatikantriebs 46 über ein Kugelgelenk 47 verbunden.

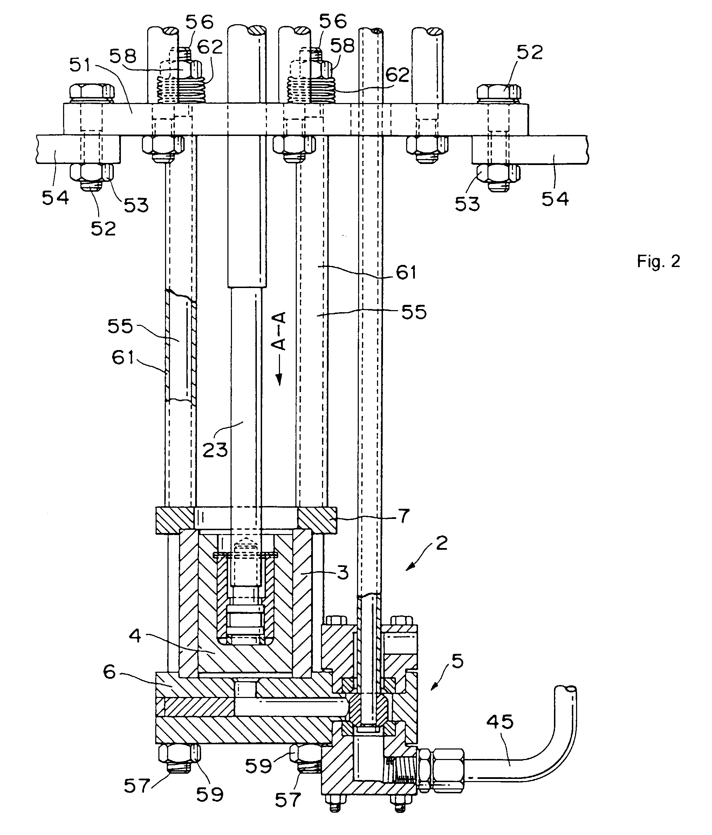

Wie aus Fig. 2 ersichtlich, ist das Gehäuse 2 der Pumpe an einer Befestigungsplatte 51 befestigt. Die Befestigungsplatte 51 ist beidseits durch Schraubbolzen 52 und Muttern 53 mit Auflageplatten 54 verbunden, die auf dem Rand des Schmelztiegels aufliegen. Die Oberfläche der zu dosierenden Flüssigkeit verläuft zwischen den Auflageplatten 54 und dem oberen Gehäuseteil 7. Das Pumpengehäuse 2 mit dem Kolben 4 und dem Zylinder 3 sowie das Ventilgehäuse 5 tauchen auf diese Weise vollständig in die zu dosierende Flüssigkeit ein.

Die Befestigungsplatte 51 besitzt Bohrungen, die von nach unten ragenden Zugankern 55 durchsetzt werden. Die Zuganker 55 durchsetzen Bohrungen in dem oberen Gehäuseteil 7 und dem unteren Gehäuseteil 6. An ihren Enden weisen die Zuganker 55 Außengewinde 56, 57 auf, auf die Befestigungsmuttern 58, 59 aufgeschraubt sind. In dem Bereich zwischen der Unterseite der Befestigungsplatte 51 und der Oberseite des oberen Gehäuseteils 7 werden die Zuganker 55 von Hülsen 61 umgeben, die an der Unterseite der Befestigungsplatte 51 und an der Oberseite des oberen Gehäuseteils 7 anliegen und die durch die Muttern 58, 59 eingespannt sind.

Die Zuganker 55 sind ferner gegen die Hülsen 61 über Federn, nämlich Tellerfedern 62, verspannt. Diese Tellerfedern 62 bilden jeweils ein Tellerfedernpaket. Die Tellerfedern 62 befinden sich zwischen der Oberseite der Befestigungsplatte 51 und der Unterseite der Muttern 58; sie sind auf diese Weise verspannt. Durch die Tellerfedern 62 können Wärmedehnungen ausgeglichen werden, die insbesondere dann entstehen, wenn die auf Umgebungstemperatur befindliche Pumpe in die heiße zu dosierende Flüssigkeit eingetaucht wird.

Die Kolbenstange 23 wird durch einen Pneumatiktrieb 63 (Fig. 1) angetrieben. Die Kolbenstange 64 des Pneumatiktriebs 63 ist über ein Kugelgelenk 65 mit der Kolbenstange 23 der Pumpe verbunden.

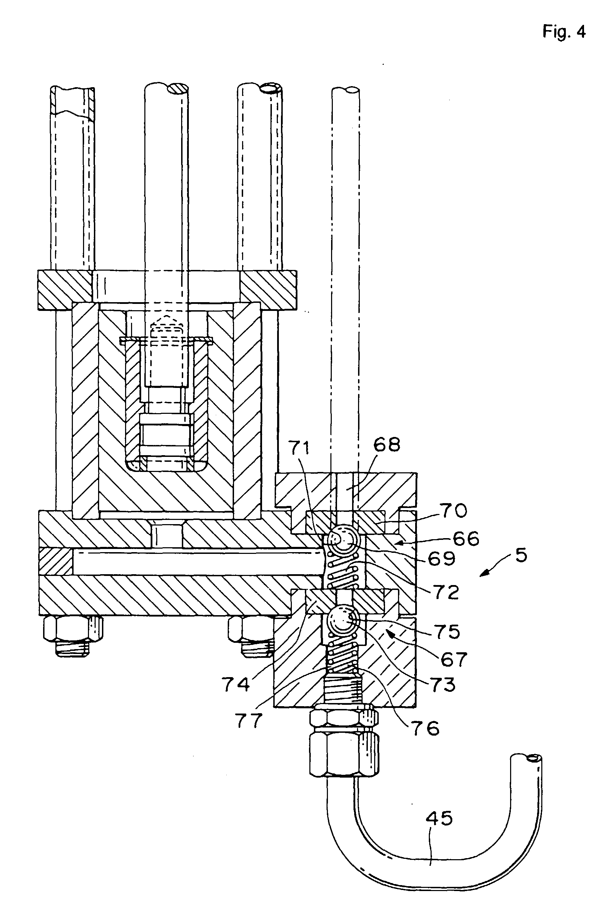

Bei der in der Fig. 4 gezeigten Variante der Dosierpumpe ist das Ventil 5 kein aktiv betätigtes Ventil, sondern ein passives Ventil, bestehend aus einem selbststeuernden Saugventil 66 und einem selbststeuernden Druckventil 67. Die zu dosierende Flüssigkeit wird durch die Saugleitung 68 dem Saugventil 66 zugeführt.

Das Saugventil 66 besteht aus einer Ventilkugel 69 und einem Ventilsitz 70, der eine kegelförmige Ventilsitzfläche 71 aufweist, die in einem Winkel von 45° verläuft. Die Ventilkugel 69 wird durch eine Druckfeder 72 an den Ventilsitz 70 gepreßt.

Das Druckventil 67 besteht ebenfalls aus einer Ventilkugel 73 und einem Ventilsitz 74, der eine kegelförmige Ventilsitzfläche 75 aufweist, die im Winkel von 45° verläuft. Die Ventilkugel 73 wird durch die Druckfeder 76 an den Ventilsitz 74 gepreßt. An das Druckventil 67 schließen sich der Druckkanal 77 und die Druckleitung 45 an. Die Ventilkugeln 69, 73 und die Ventilsitze 70, 74 sind aus Keramik, nämlich Siliziumnitrid, hergestellt.

Wie aus Fig. 3 ersichtlich, befindet sich bei dem dort dargestellten, aktiv gesteuerten Ventil der Druckventilsitz 16 auf derselben Seite wie die Ventilstange 36. Der Druckkanal 43, 42 des Ventils 45 befindet sich auf der der Ventilstange 36 abgewandten Seite des Ventilkörpers 60.

In das Gehäuse der Pumpe ist ein Zylinderteil aus Keramik eingesetzt. Der Kolben besteht aus einer Kolbenstange und einem damit verbundenen Kolbenkörper aus Keramik.

## Patentansprüche

1. Dosierpumpe (1) für Flüssigkeiten, insbesondere flüssige Metalle, insbesondere Blei oder Aluminium, bestehend aus einem Gehäuse (2) mit einem Zylinder (3) aus Keramik, in dem ein Kolben (4) aus Keramik längsverschieblich geführt ist, und mit einem Ventil (5),
dadurch gekennzeichnet,
daß das Gehäuse (2) aus einem unteren Gehäuseteil (6) und einem oberen Gehäuseteil (7) besteht, die durch Zuganker (55) und Hülsen (61) miteinander verspannt sind, wobei der Zylinder (3) zwischen den Gehäuseteilen (6, 7) gehalten ist.

2. Dosierpumpe nach Anspruch 1, dadurch gekennzeichnet, daß der Zylinder (3) und der Kolben (4) aus Siliziumnitrid bestehen.

3. Dosierpumpe nach Anspruch 1 oder 2, dadurch gekennzeichnet, daß Ventilkörper (60; 69, 73) und/oder Ventilsitze (16, 50; 70, 74) des Ventils (5) aus Keramik bestehen.

4. Dosierpumpe nach Anspruch 3, dadurch gekennzeichnet, daß der oder die Ventilkörper (60; 69, 73) und/oder die Ventilsitze (16, 50; 70, 74) aus Siliziumnitrid bestehen.

5. Dosierpumpe nach einem der vorhergehenden Ansprüche, dadurch gekennzeichnet, daß das Gehäuse (2, 6, 7) der Dosierpumpe aus Stahl besteht.

6. Dosierpumpe nach Anspruch 5, dadurch gekennzeichnet, daß das Gehäuse (2, 6, 7) aus Edelstahl besteht.

7. Dosierpumpe nach einem der vorhergehenden Ansprüche, dadurch gekennzeichnet, daß der Kolben (4) einen U-förmigen Querschnitt aufweist.

8. Dosierpumpe nach einem der vorhergehenden Ansprüche, dadurch gekennzeichnet, daß die Wandstärke des Zylinders (3) im wesentlichen genauso groß ist wie die Wandstärke des Kolbens (4, 21).

9. Dosierpumpe nach einem der vorhergehenden Ansprüche, dadurch gekennzeichnet, daß die Wandstärke eines Kolbenbodens (22) im wesentlichen genauso groß ist wie die Wandstärke des Kolbenumfangs (21).

10. Dosierpumpe nach einem der vorhergehenden Ansprüche, dadurch gekennzeichnet, daß eine Kolbenstange (23) im Bereich des Kolbenbodens (22) mit dem Kolben (4) verbunden ist.

11. Dosierpumpe nach einem der vorhergehenden Ansprüche, dadurch gekennzeichnet, daß die Kolbenstange (23) durch ein Kugelgelenk (24) mit dem Kolben (4) verbunden ist.

12. Dosierpumpe nach einem der vorhergehenden Ansprüche, dadurch gekennzeichnet, daß die Zuganker (55) gegen die Hülsen (61) über Federn (62), insbesondere Tellerfedern, miteinander verspannt sind.

13. Dosierpumpe nach einem der vorhergehenden Ansprüche, dadurch gekennzeichnet, daß die Oberfläche des Ventilkörpers (60) ganz oder teilweise aus einer Kugelfläche (17, 18) besteht und daß die Ventilsitze (16, 50; 70, 74) eine kegelförmige Oberfläche (19, 20; 71, 75) haben.

14. Dosierpumpe nach einem der Ansprüche 1 bis 12, dadurch gekennzeichnet, daß die Oberfläche desw Ventilkörpers ganz oder teilweise kegelförmig ist und daß die Ventilsitze eine kugelförmige Oberfläche aufweisen.

15. Dosierpumpe nach einem der vorhergehenden Ansprüche, dadurch gekennzeichnet, daß das Ventil (5) ein aktiv betätigtes Ventil (60, 36; Fig. 3) ist.

16. Dosierpumpe nach einem der vorhergehenden Ansprüche, dadurch gekennzeichnet, daß sich der Druckkanal (43, 42) des Ventils (5) auf der der Ventilstange (36) abgewandten Seite des Ventilkörpers (60) befindet.

17. Dosierpumpe nach einem der vorhergehenden Ansprüche, dadurch gekennzeichnet, daß ein selbststeuerndes Druckventil (67) und ein selbststeuerndes Saugventil (66) vorhanden ist.

## Claims

1. Dosing pump (1) for liquids, in particular liquid metals, especially lead or aluminium, consisting of a housing (2) with a cylinder (3) made of ceramics, into which a ceramic plunger (4) is fed, which is able to be moved in a longitudinal direction and with a valve (5),
characterised by the fact,
that the housing (2) consists of a lower housing section (6) and an upper housing section (7), which are braced together with tension rods (55) and sheaths (61), whereby the cylinder (3) is held between the housing sections (6, 7).

2. Dosing pump according to claim 1, characterised by the fact that the cylinder (3) and the plunger (4) are made of silicon nitride.

3. Dosing pump according to claim 1 or 2, characterised by the fact that the valve gate (60; 69, 73) and / or valve seats (16, 50; 70, 74) of the valve (5) are made of ceramics.

4. Dosing pump according to claim 3, characterised by the fact that the valve gate(s) (60; 69, 73) and I or the valve seats (16, 50; 70, 74) are made of silicon nitride.

5. Dosing pump according to one of the aforementioned claims, characterised by the fact that the housing (2, 6, 7) of the dosing pump is made of steel.

6. Dosing pump according to claim 5, characterised by the fact that the housing (2, 6, 7) is made of special steel.

7. Dosing pump according to one of the aforementioned claims, characterised by the fact that the plunger (4) has a U-shaped cross-section.

8. Dosing pump according to one of the aforementioned claims, characterised by the fact that the wall thickness of the cylinder (3) is primarily as large as the wall thickness of the plunger (4, 21).

9. Dosing pump according to one of the aforementioned claims, characterised by the fact that the wall thickness of a plunger base (22) is primarily as large as the wall thickness of the plunger circumference (21).

10. Dosing pump according to one of the aforementioned claims, characterised by the fact that the plunger rod (23) is joined to the plunger (4) in the area of the plunger base (22).

11. Dosing pump according to one of the aforementioned claims, characterised by the fact that the plunger rod (23) is joined to the plunger (4) by a socket joint (22).

12. Dosing pump according to one of the aforementioned claims, characterised by the fact that the tension rods (55) are braced with one another against the sheaths (61) via springs (62), in particular disc springs.

13. Dosing pump according to one of the aforementioned claims, characterised by the fact that the surface of the valve gate (60) totally or partially consists of a spherical surface (17, 18) and that the valve seats (16, 50; 70, 74) have a spherical surface (19, 20; 71, 75).

14. Dosing pump according to one of the claims 1 to 12, characterised by the fact that the surface of the valve gate is totally or partially spherical and that the valve seats have a spherical surface.

15. Dosing pump according to one of the aforementioned claims, characterised by the fact that the valve (5) is an actively operated valve (60, 36; Fig. 3).

16. Dosing pump according to one of the aforementioned claims, characterised by the fact that the pressure channel (43, 42) of the valve (5) is located on the side of the valve gate (60) opposite the valve rod (36).

17. Dosing pump according to one of the aforementioned claims, characterised by the fact that there is an automatic pressure valve (67) and an automatic suction valve (65).

## Revendications

1. Pompe de dosage (1) pour liquides, en particulier pour métaux liquides, en particulier pour le plomb ou l'aluminium, composée d'un boîtier (2) muni d'un cylindre (3) en céramique, dans lequel un piston (4) en céramique qui peut se déplacer de façon longitudinale a été introduit et qui est muni d'une soupape (5),
caractérisée par:
le boîtier (2) qui se compose d'une partie inférieure du boîtier (6) et d'une partie supérieure du boîtier (7) qui sont retenues ensemble par un tirant d'ancrage (55) et des douilles (61), en précisant que le cylindre (3) est retenu entre les parties du boîtier (6, 7).

2. Pompe de dosage d'après la revendication 1, caractérisée par le cylindre (3) et le piston (4) qui sont en nitrure de silicium.

3. Pompe de dosage d'après la revendication 1 ou 2, caractérisée par des corps de soupape (60; 69, 73) et/ou des sièges de soupape (16, 50; 70, 74) de la soupape (5) qui sont en céramique.

4. Pompe de dosage d'après la revendication 3 , caractérisée par le ou les corps de soupape (60; 69, 73) et/ou les sièges de soupape (16, 50; 70, 74) qui sont en nitrure de silicium.

5. Pompe de dosage d'après une des revendications précédentes, caractérisée par le boîtier (2, 6, 7) de la pompe de dosage qui est en acier.

6. Pompe de dosage d'après la revendication 5, caractérisée par le boîtier (2, 6, 7) qui est en acier fin.

7. Pompe de dosage d'après une des revendications précédentes, caractérisée par le piston (4) qui a une coupe transversale en forme de U.

8. Pompe de dosage d'après une des revendications précédentes, caractérisée par l'épaisseur de la paroi du cylindre (3) qui est essentiellement aussi grosse que l'épaisseur de la paroi du piston (4, 21).

9. Pompe de dosage d'après une des revendications précédentes, caractérisée par l'épaisseur de la paroi de la tête de piston (22) qui est essentiellement aussi grosse que l'épaisseur de la paroi de la périphérie du piston (21).

10. Pompe de dosage d'après une des revendications précédentes, caractérisée par une tige de piston (23) proche de la tête de piston (22) qui est reliée avec le piston (4).

11. Pompe de dosage d'après une des revendications précédentes, caractérisée par la tige de piston (23) qui est reliée avec le piston (4) par un joint à rotule (24).

12. Pompe de dosage d'après une des revendications précédentes, caractérisée par le tirant d'ancrage (55) qui est retenu contre les douilles (61) par des ressorts (62), en particulier des ressort à disques.

13. Pompe de dosage d'après une des revendications précédentes, caractérisée par la surface du corps de soupape (60) qui est composée entièrement ou partiellement par une surface sphérique (17, 18) et caractérisée par les sièges de soupape (16, 50; 70, 74) qui ont une surface conique (19, 20; 71, 75).

14. Pompe de dosage d'après une des revendications de 1 à 12, caractérisée par une surface du corps de soupape qui est entièrement ou partiellement de forme conique et par les sièges de soupape qui ont une surface sphérique.

15. Pompe de dosage d'après une des revendications précédentes, caractérisée par la soupape (5) qui est une soupape active rappelée sur son siège (60, 36; fig. 3).

16. Pompe de dosage d'après une des revendications précédentes, caractérisée par le canal de compression (43, 42) de la soupape (5) qui se situe sur le côté opposé à la tige de la soupape (36) du corps de la soupape (60).

17. Pompe de dosage d'après une des revendications précédentes, caractérisée par une soupape de compression autonome (67) et par une soupape d'aspiration autonome (66).
